# EUROPEAN PATENT SPECIFICATION

(11) **EP 3 282 561 B1**
(45) Date of publication and mention of the grant of the patent: **27.02.2019**
(21) Application number: 16176323.0
(22) Date of filing: 27.06.2016
(51) Int. Cl.: H02K 5/08, H02K 5/173, H02K 5/10

(54) **ELECTRICAL MACHINE AND METHOD FOR MANUFACTURING AN ELECTRICAL MACHINE**
ELEKTRISCHE MASCHINE UND VERFAHREN ZUR HERSTELLUNG EINER ELEKTRISCHEN MASCHINE
MACHINE ÉLECTRIQUE ET PROCÉDÉ DE FABRICATION D'UNE MACHINE ÉLECTRIQUE

(43) Date of publication of application: 14.02.2018
(73) Proprietor: ROBERT BOSCH GMBH, 70442 Stuttgart (DE)
(72) Inventor: Froehlich, Udo, 97851 Rothenfels (DE); Cernivec, Gregor, 1218 Komenda (SI); Lisjak, Rado, 1107 Ljubljana Siska (SI)
(74) Representative: Thürer, Andreas

(56) References cited:
- DE-A1-102015 013 625
- DE-A1-102015 107 621
- DE-A1-102015 110 012
- US-A1- 2016 149 460

## Description

The present invention relates to an electrical machine and a method for manufacturing an electrical machine.

DE 10 2015 110 012 A1, DE 10 2015 013 625 A1, DE 10 2015 107 621 A1 each show an electric motor having an air purging arrangement formed in a way which differs from the arrangement of the electrical machine having a stator casted with casting compound into a housing as described herein. US 2016/0149460 A1 shows a water-resistant motor and end bell.

A known electrical machine comprises a housing having a cup-shape. For example, such housing is formed like a tube having only one open end. The open end can be closed by a replaceable cover. Such housing may also be named barrel housing.

The described electrical machine comprises a housing having at the closed end of its tubular body a front flange. Thus, the front flange forms the closed end of the housing. In other words, the housing and the front flange thereof form a single part.

In addition, such an electrical machine comprises a stator which is casted with casting compound, in particular potted into an electrically insulating material, like resin. A rotor is rotatable relative to the stator. The rotor is supported both by a bearing at the front flange side of the electrical machine, which may also be named the A-side of the electrical machine, and a bearing at the other end of the electrical machine, which may also be named the bearing shield side or B-side of the electrical machine.

In such an electrical machine, air is drained by pressurized purge air, which is also named instrumental air. The air drainage by the pressurized purge air is normally accomplished using two drainage holes. One of the drainage holes is formed as a threaded inlet for the purge air on the B-side of the electrical machine. The other of the two drainage holes is a threaded outlet for the purge air on the A-side of the electrical machine.

Currently, the outlet for the purge air is positioned in the fore front of the A-side bearing of such electrical machines. Thus, the outlet for the purge air is positioned between the housing and the bearing at the A-side of the electrical machine as seen in the axial direction of the electrical machine.

The described position of the outlet for the purge air results in an electrical machine which is enlarged in its axial direction. This is a drawback as regards the costs and the aspect of a simple product manufacturing.

Therefore, it is an object of the present invention to provide an electrical machine and a method for manufacturing an electrical machine which solve the above-mentioned problems. In particular, an electrical machine and a method for manufacturing an electrical machine shall be provided which need less space than the electrical machine according to the above-mentioned state of the art and are less expensive in manufacturing the same.

This object is solved by an electrical machine according to claim 1. The electrical machine comprises a housing, a stator casted with casting compound into the housing, a rotor rotatable with respect to the stator, a bearing for bearing the rotor at one side of the stator, wherein the housing comprises an opening and a groove for a purge gas drainage as described in claim 1.

According to the positioning of the opening for purge gas drainage, the electrical machine does not need an additional length increment of the housing of the electrical machine due to the opening. Therefore, the length of the electrical machine having the provisions for the gas drainage or purge gas is the same independent of the type or manufacturer of the electrical machine. An equal length of the electrical machines having the provisions for the gas drainage or purge gas independent of the type manufacturer thereof results in lower material consumption and consequently lighter electrical machines. Herein, lower material consumption results in lower manufacturing costs. And, a lighter electrical machine results in lower transport costs.

As a further advantage, the manufacturing process for providing the purge gas drainage can be performed with the same tools which are used to produce housing and flange of the electrical machines independent of the manufacturer of the electrical machine or the type of the electrical machine.

Due to the less variation of input parts and assemblies, cost savings are possible as regards logistics and storage of the parts necessary for manufacturing the electrical machine.

Further advantageous developments of the electrical machine are set out in the dependent claims.

Preferably, the groove is positioned in the axial direction of the rotor in a seat for the bearing and the opening is positioned in a radial direction of the rotor or a direction transverse to the radial direction of the rotor.

In one implementation form, the groove may be positioned in the axial direction of the rotor and along the entire axial length of a seat for the bearing.

Possibly, the housing and a front flange of the electrical machine form a single part.

The electrical machine may further comprise a plurality of potted casting compounds which are positioned spaced to each other at an end of the stator at which the bearing is positioned, wherein the opening is positioned in a space between two of the plurality of potted casting compounds.

It is also possible that the electrical machine further comprises a rear cover for covering the other end of the electrical machine by mating with the housing, wherein the rear cover comprises an opening for inserting pressurized gas into the housing.

The electrical machine can be a synchronous machine and/or the rotor can comprise permanent magnets.

In one advantageous embodiment, the electrical machine is an electric motor and/or the casting compound is made of resin.

The above-mentioned object is further solved by a method for manufacturing an electrical machine according to claim 9. The electrical machine comprises a housing, a stator casted with casting compound, a rotor rotatable with respect to the stator, a bearing for bearing the rotor at one side of the stator. The method comprises the steps of machining an opening for a purge gas drainage into the housing, and machining a groove into the housing as described in claim 9.

Further advantageous developments of the method are set out in the dependent claims.

In the method, the groove can be machined in the axial direction of the rotor in a seat for the bearing. Further, the opening can be machined in a radial direction of the rotor or a direction transverse to the radial direction of the rotor.

Further possible implementations of the invention comprise also combinations of features or styles described above or in the following with reference to the embodiments, even if the combinations are not explicitly mentioned. Therefore, the person skilled in the art will also add single aspects as improvements or additions to the respective basic form of the invention.

In the following, the invention is described in more detail by means of embodiments and with reference to the appended drawing Figures, wherein:
Fig. 1 shows an axial cross-section of an electrical machine according to a first embodiment;
Fig. 2 shows a radial cross-section of the electrical machine according to the first embodiment; and
Fig. 3 shows a detail of the front flange and the housing on the A-side of an electrical machine as well as the outlet of the purge gas at the position of a bearing seat of the electrical machine according to a second embodiment.

In the drawing Figures, the same or functionally same elements are provided with the same reference signs unless given otherwise.

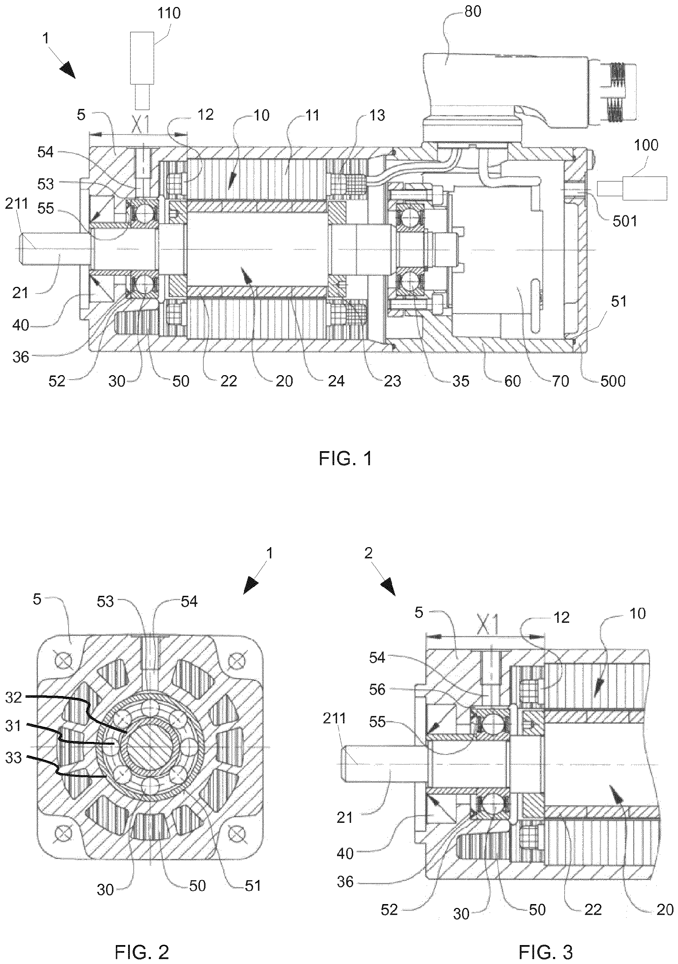

Fig. 1 shows an electrical machine 1. The electrical machine 1 is a synchronous electrical machine. However, the electrical machine 1 is not limited thereto and can also be implemented as any other electrical machine. The electrical machine 1 may be implemented as an electric motor or an electric generator.

The electrical machine 1 comprises a housing 5 having a cup-shape. In other words, the housing 5 is a barrel housing. In the housing 5 are housed a stator 10 and a rotor 20, a first bearing 30, a second bearing 35, a spring washer 36 for preloading the first bearing 30, a sealing ring 40, a plurality of casting compounds 50, a bearing shield 60, an incremental encoder 70, a rear cover 500 and a power connector 80. A gas instrument 100 for inserting the gas into the housing 5 and a gas instrument 110 for outputting the gas out of the housing 5 can be connected to the housing 5 as described in the following.

The first bearing 30 is positioned on the left side in Fig. 1, which side is the A-side of the electrical machine 1. The second bearing 35 is positioned on the right side in Fig. 1, which side is the B-side of the electrical machine 1.

The stator 10 comprises a laminated stack 11, an insulating foil 12 and coils 13.

The rotor 20 comprises a shaft 21, magnets 22, balancing rings 23, and the bandage 24. The magnets 22 can be permanent magnets. At least one of the permanent magnets 22 can be made of rare earth. However, any other materials suitable for permanent magnets 22 can be used.

The shaft 21 is fixed to the rotor 20 and is seated by the first and second bearings 30, 35 so that the shaft 21 together with the rotor 20 can be rotated around its axis 211. Therewith, the rotor 20 can be moved relative to the stator 10.

The housing 5 is closed at its front end, i.e. on the A-side of the electrical machine 1, by a front flange. Due to a clear depiction in Fig. 1, only the axial length X1 of the front flange in the direction of the axis 211 is marked in Fig. 1.

In Fig. 1, the housing 5 forms a tubular body, to which at least some, but preferably each one, of the plurality of the casting compounds 50 are mating. The material for the casting compounds 50 is preferably an electrically insulating material, like resin. Thus, the stator 10 is casted with casting compound, in particular potted therein.

The housing 5 has at its rear end an aperture 51 which can be closed by the rear cover 500. The rear cover 80 covers the other end of the electrical machine 1, as shown in Fig. 1 by mating with the housing 5.

Further, the rear cover 500 has an opening 501 for inserting gas, in particular a pressurized gas, for example pressurized air, etc., into the housing 5. The opening 501 may be formed as a threaded hole so that the gas instrument 100 can be securely fixed thereto. However, the opening 501 may be formed as a hole for accommodating a seal for receiving the gas instrument 100, preferably in press fit.

The outlet for the gas is formed at the front end of the housing 5, namely in the front flange. In this regard, a groove 53 and an opening 54 are provided. The groove 53 is positioned at a bearing seat 52 of the housing 5. The groove 53 in the housing 5 is faced to the bearing 30. The groove 53 is directed in the axial direction of the shaft 21, and thus the axial direction of the electrical machine 1 and the housing 5. The opening 54 is provided in the housing 5 in the radial direction of the electrical machine 1. The radial direction can also be named transverse direction. The bearing 30 abuts at its front end to a front bearing seat 55 of the housing 5.

Due to the above-described construction, the housing 5 has an opening 54 which is connected to the groove 53. Therewith, the opening 54 and the groove provide a channel along which a purge gas, like air, for example, can be purged starting from the inlet at the opening 501 through the electrical machine 1 to the outlet via the opening 54.

As a result of positioning the opening 54 and the groove 53 in the housing 5 a described above, space required for the opening 54 can be saved in the axial direction of the electrical machine 1.

Fig. 2 shows a further cross-section of the electrical machine 1. Thus, the bearing 30 comprises a plurality of balls 31 arranged between an inner bearing seat 32 and an outer bearing seat 33. The opening 54 is positioned between two casting compounds 50. The casting compounds 50 are arranged spaced to each other around the bearing 30, which is formed as a ring bearing.

Due to the above-described construction of the electrical machine 1 and the housing 5, the front flange of the electrical machine 1 is an integral part of the housing 5. In other words, the housing and a front flange of the electrical machine 1 form a single part.

In a method for manufacturing the electrical machine 1, the opening 54 is machined into the housing 5 and the groove 52 is machined into the housing 5 such that the groove 52 is connected with the opening 54 and positioned to be faced to the bearing 30.

The both steps of the method can be performed in an arbitrary order one after another. The both steps can even be performed at least partly simultaneously.

The groove 53 and the opening 54 may both be machined into the housing 5 by drilling or milling. The groove 53 can be drilled by inserting a drilling or milling tool through the aperture 51 in the direction of the axis 211 into the housing 5. The opening 54 is manufactured by drilling or milling in a direction transverse to the axial direction of the axis 211.

Both the opening 501 for inserting the purge gas and the opening 54 for letting the purge gas out of the electrical machine 1 can be at least partly provided with a thread. The thread can be machined into the openings 54, 501 in further method steps.

Thus, the instrument 100 for inserting the purge gas into the electrical machine 1 can be easily and securely fastened to the electrical machine 1. The same is valid for the instrument 110 connectable to the opening 54 at the gas outlet of the electrical machine 1.

Resulting from the above-described method, there is further provided a housing 5 for an electrical machine 1. The housing 5 is provided to accommodate casting compounds 50 of the stator 10 to cast the stator 10 into the housing 5. Herein, the rotor 20 is rotatable with respect to the stator 10 by the use of a bearing 30 for bearing the rotor 20 at one side of the stator 10. The housing 5 comprises the opening 54 and the groove 53 for a purge gas drainage, and the groove 53 is faced to the bearing 30 and connected with the opening 54. Fig. 3 shows a partial cross-section of an electrical machine 2 according to a second embodiment. The electrical machine 2 is implemented in most parts in the same way as described above in respect of the electrical machine 1 of the first embodiment. However, in contrast to the groove 53 of the electrical machine 1 of the first embodiment, the electrical machine 2 according to a second embodiment has a groove 56. The groove 56 is positioned at the bearing 30 such that the groove 56 extends up to the end 52 of the bearing 30.

Consequently, the groove 56 is positioned in the axial direction of the rotor 20. Further, the groove 56 is positioned along the entire length of the bearing seat 52 for the bearing 30 in the housing 5.

Such an implementation form may be advantageous to provide also a purging of the electrical machine 2 in the entire axial length of the bearing 30.

Also in this embodiment, the length X1 of the outer front flange of the housing 5 up to the edge of the stator 10 and rotor 20 is shorter than in the electrical machines described above as the prior art.

The electrical machine 2 and the housing 5 can be manufactured using the same method steps as described above in respect of the first embodiment.

All of the above-described implementations of the electrical machines 1, 2 and the method can be used separately or in all possible combinations thereof. In particular, an arbitrary combination of the features of the embodiments is possible. Moreover, in particular the following modifications are conceivable.

The elements shown in the figures are depicted schematically and can differ in the specific implementation from the forms shown in the figures provided that the above-described functions are ensured.

The dimensions of the grooves 53, 56 and the opening 54 can be chosen as required by regarding the above-description.

## Claims

1. An electrical machine (1; 2), comprising
a housing (5),
a stator (10) casted with casting compound (50) into the housing (5),
a rotor (20) rotatable with respect to the stator (10),
a bearing (30) for bearing the rotor (20) at one side of the stator (10),
wherein the housing (5) comprises an opening (54) and a groove (53; 56) for a purge gas drainage,
wherein the groove (53; 56) is faced to the bearing (30) and is connected with the opening (54) such that the groove (53; 56) is positioned at one end of the opening (54),
wherein the groove (53; 56) is positioned in the axial direction of the rotor (20) in a bearing seat (52) and the opening (54) is positioned in a radial direction of the rotor (20) or a direction transverse to the radial direction of the rotor (20), and
wherein the other end of the opening (54), to which an instrument (110) for a gas outlet of the electrical machine (1; 2) is connectable, is positioned at an outer face of the housing (5), which is positioned spaced to the bearing seat (52) in the radial direction of the rotor (20).

2. The electrical machine (1; 2) according to claim 1, wherein the housing (5) comprises the bearing seat (52) which is positioned in the axial direction of the housing (5) and the rotor (20).

3. The electrical machine (2) according to claim 1 or 2, wherein the groove (56) is both positioned in the axial direction of the rotor (20) and along the entire axial length of a seat (52) for the bearing (30).

4. The electrical machine (1; 2) according to one of the preceding claims, wherein the housing (5) and a front flange of the electrical machine (1; 2) form a single part.

5. The electrical machine (1; 2) according to one of the preceding claims,
further comprising a plurality of potted casting compounds (50) which are positioned spaced to each other at an end of the stator (10) at which the bearing (30) is positioned,
wherein the opening (54) is positioned in a space between two of the plurality of potted casting compounds (50).

6. The electrical machine (1; 2) according to one of the preceding claims,
further comprising a rear cover (500) for covering the other end of the electrical machine (1; 2) by mating with the housing (5),
wherein the rear cover (500) comprises an opening (501) for inserting pressurized gas into the housing (5).

7. The electrical machine (1; 2) according to one of the preceding claims, wherein the electrical machine (1; 2) is a synchronous machine and/or the rotor (20) comprises permanent magnets (22).

8. The electrical machine (1; 2) according to one of the preceding claims, wherein the electrical machine (1; 2) is an electric motor and/or the casting compound (50) is made of resin.

9. A method for manufacturing an electrical machine (1; 2) which comprises a housing (5), a stator (10) casted with casting compound, a rotor (20) rotatable with respect to the stator (10), a bearing (30) for bearing the rotor (20) at one side of the stator (10), the method comprising the steps of:
machining an opening (54) for a purge gas drainage into the housing (5), and
machining a groove (53; 56) into the housing (5) such that the groove (53; 56) is connected with the opening (54) and positioned to be faced to the bearing (30) such that the groove (53; 56) is positioned at one end of the opening (54),
wherein the groove (53; 56) is machined in the axial direction of the rotor (20) in a bearing seat (52) and the opening (54) is machined in a radial direction of the rotor (20) or a direction transverse to the radial direction of the rotor (20), and
wherein the other end of the opening (54), to which an instrument (110) for a gas outlet of the electrical machine (1; 2) is connectable, is positioned at an outer face of the housing (5), which is positioned spaced to the bearing seat (52) in the radial direction of the rotor (20).

10. The method according to claim 9,
wherein the electrical machine (1; 2) further comprises a plurality of potted casting compounds (50) which are positioned spaced to each other at an end of the stator (10) at which the bearing (30) is positioned, and
wherein the opening (54) is machined in a space between two of the plurality of potted casting compounds (50).

## Patentansprüche

1. Elektrische Maschine (1; 2), die Folgendes umfasst:
ein Gehäuse (5),
einen Stator (10), der mit einer Vergussmasse in das Gehäuse (5) gegossen ist,
einen Rotor (20), der in Bezug auf den Stator (10) drehbar ist,
ein Lager (30) zum Lagern des Rotors (20) an einer Seite des Stators (10),
wobei das Gehäuse (5) eine Öffnung (54) und eine Rille (53; 56) für einen Spülgasablauf umfasst,
wobei die Rille (53; 56) dem Lager (30) zugewandt ist und mit der Öffnung (54) derart verbunden ist, dass die Rille (53; 56) an einem Ende der Öffnung (54) positioniert ist,
wobei die Rille (53; 56) in der axialen Richtung des Rotors (20) in einem Lagersitz (52) positioniert ist und die Öffnung (54) in einer radialen Richtung des Rotors (20) oder einer Richtung quer zu der radialen Richtung des Rotors (20) positioniert ist und
wobei das andere Ende der Öffnung (54), mit der ein Instrument (110) für einen Gasauslass der elektrischen Maschine (1; 2) verbunden werden kann, an einer äußeren Fläche des Gehäuses (5) positioniert ist, die zu dem Lagersitz (52) in der radialen Richtung des Rotors (20) beabstandet positioniert ist.

2. Elektrische Maschine (1; 2) nach Anspruch 1, wobei das Gehäuse (5) den Lagersitz (52) umfasst, der in der axialen Richtung des Gehäuses (5) und des Rotors (20) positioniert ist.

3. Elektrische Maschine (2) nach Anspruch 1 oder 2, wobei die Rille (56) sowohl in der axialen Richtung des Rotors (20) als auch entlang der gesamten axialen Länge eines Sitzes (52) für das Lager (30) positioniert ist.

4. Elektrische Maschine (1; 2) nach einem der vorhergehenden Ansprüche, wobei das Gehäuse (5) und ein vorderer Flansch der elektrischen Maschine (1; 2) einen einzigen Teil bilden.

5. Elektrische Maschine (1; 2) nach einem der vorhergehenden Ansprüche,
die ferner mehrere gegossene Vergussmassen (50) umfasst, die beabstandet zueinander an einem Ende des Stators (10) positioniert sind, an dem das Lager (30) positioniert ist,
wobei die Öffnung (54) in einem Raum zwischen zwei der mehreren vergossenen Vergussmassen (50 positioniert ist.

6. Elektrische Maschine (1; 2) nach einem der vorhergehenden Ansprüche,
die ferner eine hintere Abdeckung (500) zum Bedecken des anderen Endes der elektrischen Maschine (1; 2) durch Ineinandergreifen mit dem Gehäuse (5) umfasst,
wobei die hintere Abdeckung (500) eine Öffnung (501) zum Einführen von unter Druck stehendem Gas in das Gehäuse (5) umfasst.

7. Elektrische Maschine (1; 2) nach einem der vorhergehenden Ansprüche, wobei die elektrische Maschine (1; 2) eine synchrone Maschine ist und/oder der Rotor (20) Permanentmagneten (22) umfasst.

8. Elektrische Maschine (1; 2) nach einem der vorhergehenden Ansprüche, wobei die elektrische Maschine (1; 2) ein Elektromotor ist und/oder die Vergussmasse (50) aus Harz hergestellt ist.

9. Verfahren zum Herstellen einer elektrischen Maschine (1; 2), die ein Gehäuse (5), einen Stator (10), der mit Vergussmasse vergossen ist, einen Rotor (20), der in Bezug auf den Stator (10) drehbar ist, und ein Lager (30) zum Lagern des Rotors (20) an einer Seite des Stators (10) umfasst, wobei das Verfahren die folgenden Schritte umfasst:
Erzeugen einer Öffnung (54) für einen Spülgasablauf in dem Gehäuse (5) durch maschinelle Bearbeitung und
Erzeugen einer Rille (53; 56) in dem Gehäuse (5) durch maschinelle Bearbeitung, so dass die Rille (53; 56) mit der Öffnung (54) verbunden ist und so positioniert ist, dass sie dem Lager (30) zugewandt ist, so dass die Rille (53; 56) an einem Ende der Öffnung (54) positioniert ist,
wobei die Rille (53; 56) in der axialen Richtung des Rotors (20) in einem Lagersitz (52) durch maschinelle Bearbeitung erzeugt ist und die Öffnung (54) in einer radialen Richtung des Rotors (20) oder einer Richtung quer zu der radialen Richtung des Rotors (20) durch maschinelle Bearbeitung erzeugt ist, und
wobei das andere Ende der Öffnung (54), mit der ein Instrument (110) für einen Gasauslass der elektrischen Maschine (1; 2) verbunden werden kann, an einer äußeren Fläche des Gehäuses (5) positioniert ist, die zu dem Lagersitz (52) in der radialen Richtung des Rotors (20) beabstandet positioniert ist.

10. Verfahren nach Anspruch 9,
wobei die elektrische Maschine (1; 2) ferner mehrere gegossene Vergussmassen (50) umfasst, die beabstandet zueinander an einem Ende des Stators (10) positioniert sind, an dem das Lager (30) positioniert ist, und
wobei die Öffnung (54) in einem Raum zwischen zwei der mehreren gegossenen Gussmassen (50) durch maschinelle Bearbeitung erzeugt ist.

## Revendications

1. Machine électrique (1 ; 2), comprenant
un boîtier (5),
un stator (10) moulé avec un composé de moulage (50) dans le boîtier (5),
un rotor (20) rotatif par rapport au stator (10), un palier (30) pour supporter le rotor (20) sur un côté du stator (10),
dans laquelle le boîtier (5) comprend une ouverture (54) et une rainure (53 ; 56) pour un drainage de gaz de purge,
dans laquelle la rainure (53 ; 56) est opposée au palier (30) et est raccordée à l'ouverture (54) de telle sorte que la rainure (53 ; 56) soit positionnée à une extrémité de l'ouverture (54),
dans laquelle la rainure (53 ; 56) est positionnée dans la direction axiale du rotor (20) dans un siège de palier (52) et l'ouverture (54) est positionnée dans une direction radiale du rotor (20) ou une direction transversale à la direction radiale du rotor (20), et
dans laquelle l'autre extrémité de l'ouverture (54), à laquelle un instrument (110) pour une sortie de gaz de la machine électrique (1 ; 2) est raccordable, est positionnée sur une face extérieure du boîtier (5), qui est positionnée de façon espacée au siège de palier (52) dans la direction radiale du rotor (20).

2. Machine électrique (1 ; 2) selon la revendication 1, dans laquelle le boîtier (5) comprend le siège de palier (52) qui est positionné dans la direction axiale du boîtier (5) et du rotor (20).

3. Machine électrique (2) selon la revendication 1 ou 2, dans laquelle la rainure (56) est à la fois positionnée dans la direction axiale du rotor (20) et le long de la longueur axiale entière d'un siège (52) pour le palier (30).

4. Machine électrique (1 ; 2) selon une des revendications précédentes, dans laquelle
le boîtier (5) et une bride avant de la machine électrique (1 ; 2) forment une seule partie.

5. Machine électrique (1 ; 2) selon une des revendications précédentes,
comprenant en outre une pluralité de composés de moulage enrobés (50) qui sont positionnés de façon espacée les uns des autres à une extrémité du stator (10) à laquelle le palier (30) est positionné,
dans laquelle l'ouverture (54) est positionnée dans un espace entre deux de la pluralité de composés de moulage enrobés (50).

6. Machine électrique (1 ; 2) selon une des revendications précédentes,
comprenant en outre un couvercle arrière (500) pour couvrir l'autre extrémité de la machine électrique (1 ; 2) en s'accouplant au boîtier (5),
dans laquelle le couvercle arrière (500) comprend une ouverture (501) pour insérer un gaz sous pression dans le boîtier (5).

7. Machine électrique (1 ; 2) selon une des revendications précédentes, dans laquelle
la machine électrique (1 ; 2) est une machine synchrone et/ou le rotor (20) comprend des aimants permanents (22).

8. Machine électrique (1 ; 2) selon une des revendications précédentes, dans laquelle
la machine électrique (1 ; 2) est un moteur électrique et/ou le composé de moulage (50) est fait de résine.

9. Procédé pour fabriquer une machine électrique (1 ; 2) qui comprend un boîtier (5), un stator (10) moulé avec un composé de moulage, un rotor (20) rotatif par rapport au stator (10), un palier (30) pour supporter le rotor (20) sur un côté du stator (10), le procédé comprenant les étapes de :
l'usinage d'une ouverture (54) pour un drainage de gaz de purge dans le boîtier (5), et l'usinage d'une rainure (53 ; 56) dans le boîtier (5) de telle sorte que la rainure (53 ; 56) soit raccordée à l'ouverture (54) et positionnée pour être opposée au palier (30) de telle sorte que la rainure (53 ; 56) soit positionnée à une extrémité de l'ouverture (54),
dans lequel la rainure (53 ; 56) est usinée dans la direction axiale du rotor (20) dans un siège de palier (52) et l'ouverture (54) est usinée dans une direction radiale du rotor (20) ou une direction transversale à la direction radiale du rotor (20), et
dans lequel l'autre extrémité de l'ouverture (54), à laquelle un instrument (110) pour une sortie de gaz de la machine électrique (1 ; 2) est raccordable, est positionnée sur une face extérieure du boîtier (5), qui est positionnée de façon espacée au siège de palier (52) dans la direction radiale du rotor (20).

10. Procédé selon la revendication 9,
dans lequel la machine électrique (1 ; 2) comprend en outre une pluralité de composés de moulage enrobés (50) qui sont positionnés de façon espacée les uns aux autres à une extrémité du stator (10) à laquelle le palier (30) est positionné, et
dans lequel l'ouverture (54) est usinée dans un espace entre deux de la pluralité de composés de moulage enrobés (50).
